# EUROPEAN PATENT SPECIFICATION

(11) **EP 3 869 439 B1**
(45) Date of publication and mention of the grant of the patent: **17.09.2025**
(21) Application number: 21158008.9
(22) Date of filing: 18.02.2021
(51) Int. Cl.: G06Q 30/02, E05D 7/082, E06B 9/11, G06F 16/955

(54) **WINDOW WITH VISIBLE MACHINE-READABLE IDENTIFIER**
FENSTER MIT SICHTBARER MASCHINENLESBARER KENNUNG
FENÊTRE COMPORTANT UN IDENTIFIANT VISIBLE LISIBLE PAR MACHINE

(30) Priority: 21.02.2020 DK PA202070107; 24.03.2020 DK PA202070181
(43) Date of publication of application: 25.08.2021
(73) Proprietor: VKR Holding A/S, 2970 Hørsholm (DK)
(72) Inventor: MØLLER, Morten, 2970 Hørsholm (DK)
(74) Representative: Høiberg P/S

(56) References cited:
- EP-A1- 2 205 804
- EP-B1- 1 003 953
- DE-A1- 102012 017 000
- JP-A- 2012 062 740
- US-A1- 2014 006 207
- US-A1- 2014 203 085
- KEYLITE ROOF WINDOWS: "Keylite Innovation - Features & Benefits with SkillBuilder's Roger Bisby", 7 November 2017 (2017-11-07), XP093134765, Retrieved from the Internet <URL:https://www.youtube.com/watch?v=Ycn-mRU6LXc> [retrieved on 20240226]

## Description

The present disclosure relates to a roof window.

### Background

Windows for buildings are normally arranged in outer walls or roof structures of a building, and are configured to cover window apertures in such buildings or roof structures. When such windows have been installed, end users (e.g. habitants, owners or administrators of the building) may find it quite difficult to identify and find suitable covering devices such as blinds or shutters for the installed window, or may not even be aware of which compatible aperture covering solution that exists for the respective window.

It is generally known to provide coverings such as roller blinds that are intentionally too wide, but are designed to be cut into the correct size after a purchase of the roller blind, and the manufacturer here hence relies on the user to cut the roller blind into a suitable size. A similar solution is provided for venetian blinds where slats of various types of hard material, including wood, plastic or metal may be cut into a desired size by a suitable cutting tool.

An alternative solution is that different window coverings, which are specifically adapted to different sizes, types and/or generations of windows, are made available by e.g. the window manufacturers, and these fit the respective window size, type and/or generation. Hence, when a user buys such a window covering, the user is assured that it fits the respective window. This naturally necessitates that a larger amount of different window coverings are needed. Moreover, this makes it complicated for the user to select the right covering device and may provide an unfortunate user experience when users tries to order such covering devices, as the risk of erroneously ordering an incompatible covering device may be significant. Hence, it is also known to apply an information label on the specific window which provides window information such as window size, window generation, window type, window material etc. which enables the user to identify relevant window information. Moreover, it is known to provide a Quick Response (QR) code on a window that is hidden between a sash and frame, where the code comprises information of the window.

A promotional video available at https://www.youtube.com/watch?v=Ycn-mRU6LXc shows a roof window equipped with a removable sticker applied to the glazing, the removable sticker including a visual representation of a window covering.

However, despite of all these measures provided, problems still exists for users when identifying and/or selecting correct accessory such as covering devices for windows. The present disclosure may help to solve one or more of the above mentioned issues. Additionally or alternatively, the present disclosure may help to provide an enhanced user experience for users that may have a desire or need of purchasing and/or getting informed of available window accessories for a window.

### Summary

The present disclosure relates to a roof window for a building, as defined in the appended claims.

The present disclosure provides a user friendly solution where a user may easily scan/read the machine readable identifier by means of a hand held user terminal without needing to manipulate the sash to try to find some kind of window information registered at a normally hidden location on the window. As the machine-readable identifier comprises identification data of the window and/or identification data of at least one window covering device, this enables a user to find a suitable window covering device that fits the roof window and is also able /configured to be installed by means of the fastening mechanism(s) of the roof window.

For example roof windows may be manufactured in predefined dimensions and sizes, and with varying types of fastening mechanisms. The same may apply for covering devices that may be pre-manufactured to fit a specific window size and/or dimension and comprise a specific fastening mechanism(s) that is specially adapted to engage with predefined and preinstalled fastening mechanisms of that window type. The window size, type and/or dimensions may also be a determining factor for what type of covering device that fits the window.

Prior art roof windows may use hidden labels with codes, serial numbers, production information etc. and the labels are located at different hidden locations depending on the window manufacturer. Further the labels display numbers, codes, date, serial numbers etc. which are not understandable for the end user. In accordance with aspects of the present disclosure, a user may easily see the machine readable identifier as it is placed visible at a part of the frame when the sash is closed, at least before the covering device is installed (in case the machine readable identifier is placed so that the covering device hides a part of the machine readable identifier when installed). This may also be provided in e.g. roof windows or other windows that are normally placed out of reach, or at least may be rather hard to access properly and in a safe way. Hence, a user may operate the hand held user terminal to e.g. scan or in other ways read/retrieve the machine readable identifier by means of a hand held user terminal when the sash is closed. Moreover, the present disclosure enables a more user friendly, as well as manufacturer friendly, solution as new fastening systems that are developed over time may more easily be identified.

The present disclosure provides a user friendly solution where the risk of a user ending up with a window covering device that does not fit the respective window properly, is reduced.

Moreover, the present disclosure provides a user friendly solution where a user may more easily identify the presence of, and scan the machine readable identifier by means of a hand held user terminal more easily compared to present solutions, as the machine readable identifier is visible when the sash is in a closed position.

In one or more aspects of the present disclosure, the window covering device comprises a blind such as a roller blind or a venetian blind.

It is generally understood that the machine readable identifier is preferably placed visible at a part of the frame when the sash is closed by being arranged at a generally visible part/surface of the frame so that the machine readable identifier is visible to a user when the sash is closed. This may be an interior, visible surface of the frame or the first fastening mechanism that faces the interior of the building and is visible by human eye when the sash is closed.

The window may be opened and closed by changing the relative position of the roof window pane and the frame by any number of mechanisms such as hinge systems as is known in the art.

The pane may preferably be an insulated glass (IG) pane such as a gas insulated glass pane or a vacuum insulated glass (VIG) pane. The gas insulated glass unit may comprise a cavity between two glass sheets which is filled with argon or another gas. Generally, the insulated glass pane may comprise two, three (also called "tripple pane") or more cavities separated by the glass sheets of the insulated glass unit.

The window covering device may for example in aspects be a shade or screen to be installed at the window and configured to provide one or more functions. The one or more functions may provide shading, privacy and/or managing heat transfer from the sun through the window pane by reducing or increasing the amount of sunlight allowed to pass through the glass pane and into the interior of the building, thereby heating the room. In some aspects of the present disclosure, the window covering device to be installed at the roof window comprises a sheet of flexible material having a size and shape substantially identical to or slightly narrower than, at least the visible part of the window pane that may not be covered by the frame. The sheet of flexible material may in aspects of the present disclosure be made from a textile a non-woven fabric, a polymer such as a plastic sheet or the like. In some aspects, the window covering device includes one or more drapes to be mounted at an interior side of the window. The one or more drapes may provide that a user can select a preferred style for the one or more drapes among a plurality of decorative patterns and/or colours. In some aspects of the present disclosure, the window covering device comprises blinds, such as pleated blinds, roller blinds, interior shutters or the like to be mounted at an interior side of the window.

In one or more aspects of the present disclosure, the first fastening mechanism is placed at a surface of the frame, wherein the machine readable identifier is placed on the same surface of the frame. Additionally or alternatively, in one or more aspects of the present disclosure, the surface may be a surface facing towards the frame opening of the frame, such as the sash opening. In one or more aspects, the first fastening mechanism may be placed on this surface facing the frame opening.

This may help to provide that the user gets the impression or idea that the machine readable identifier relates to the functionality of the first fastening mechanisms.

Generally, instruction manuals are often lost or discarded after roof window installation, providing that it may be difficult for a user to find out how to order a suitable covering device, or even whether specifically adapted covering devices may exists. The present disclosure provides a solution where the user may more easy and intuitively access information on suitable covering devices configured to be installed at the respective roof window.

In other or additional aspects of the present disclosure, the machine readable identifier may be placed at the same frame part/component of the frame, but not necessarily at the same surface as the first fastening mechanism. E.g. in aspects of the present disclosure, the machine readable identifier may be placed at a surface neighbouring to a surface at which the first fastening mechanism is placed.

In other aspects of the present disclosure, the machine readable identifier may be placed on the first fastening mechanism.

In one or more aspects of the present disclosure, the frame part of the sash may comprise a handle, and the machine readable identifier may be placed on the handle.

In one or more aspects of the present disclosure, the machine readable identifier is placed at a frame part of the sash.

In one or more aspects of the present disclosure, the machine readable identifier may be placed in close proximity of the fastening mechanism, for example within 0.1 cm to 20 cm, such as within 0.1 cm to or 15 cm from the first fastening mechanism. This may help to increase the chance of the user relating the machine readable identifier to the functionality of the first fastening mechanism.

In one or more aspects of the present disclosure, a visual indication, such as an arrow, text or the like, may indicate that the functionality of the machine readable identifier is related to the first fastening mechanism and use thereof.

In one or more aspects of the present disclosure, said type of window covering device comprises a blind with a covering portion and one or more guiding rails for guiding at least the covering portion and to keep/maintain the covering part along the length of the window frame when it is placed/expanded/rolled out to cover a part of the window pane.

Roof windows may often comprise such guiding rails since the roof windows are generally often paced with the window pane in an angle different to horizontal. The rails hence helps to keep the covering part in place. The guiding rails should be preadapted to the window size, so that when the user scans the machine readable identifier, and orders a covering device that should fit the window, prefabricated guiding rails of the correct length that fits the window length/height are also automatically provided to be installed to be part of the covering device.

In one or more aspects of the present disclosure, a frame connection part of the guiding rail, may extend in over and cover at least a part of the machine readable identifier.

In one or more aspects of the present disclosure, the pane of the roof window comprises a visible part having a width, wherein the at least one window covering device is of a predefined width that is configured to be installed at the window having a said visible part with said width.

In one or more aspects of the present disclosure, the at least one first fastening mechanism comprises a bracket, such as a bracket with which the second fastening mechanism is configured to slideably engage.

In one or more aspects of the present disclosure, the first and second fastening mechanisms may together comprise a "slide and snap" solution where the second fastening mechanisms comprises a resilient part that is configured to slide along a part of the first fastening mechanism and subsequently engage by snapping/clicking into a desired position due to the resiliency of the resilient part. The first and/or second fastening mechanism(s) may comprise rails, tracks or slits configured to engage with one or more protrusions of the other fastening mechanism in order to maintain the covering device at the desired location at the window.

The bracket may be permanently installed and fixed to the window upon delivery of the window.

In one or more aspects of the present disclosure, the first fastening mechanism may comprise a bracket of a plug kind while the second fastening mechanism may comprise a counterpart bracket of a socket kind. The first fastening mechanism may in aspects protrude from a surface of the frame. The second fastening mechanism may comprise a notch recess in the covering device. The second fastening mechanism may comprise an elastic element such as a spring-loaded pin or an elastic finger which engage the first fastening mechanism when installing the covering device.

In aspects of the present disclosure, the machine readable identifier may be configured to be permanently maintained at the frame. This may in aspects of the present disclosure be provided by means of one or more of printing, an adhesive and/or one or more mechanical fasteners, such as by being a permanent label affixed to the frame.

The visible machine readable identifier on the frame may be configured as a permanent label designed for "one-time application". It may be provided by a permanent printing solution, or use of a strong adhesive that creates a strong, or permanent, bond between the label and the surface. An adhesive used for the permanent label may provide a secure bond to the surface material while accommodating the environmental conditions for the window, such as resistance to temperature changes, rather high temperatures, such as above 70°C as roof windows may experience very high temperatures, moisture, chemicals during window cleaning by means of liquid and possible detergents over the lifetime of the window and/or the like.

The permanent label may in one or more aspects of the present disclosure be configured to be resistant to sunlight and/or cleaning liquids such as water comprising a certain amount of detergent such as soap based detergent and/or alcohol containing cleaning liquid over at least the majority of the estimated lifetime of the roof window. Hence, at least 25 cleanings, such as at least 100 cleanings of the surface of the pane of the roof window arranged at the same side of the window as the permanent machine readable identifier may not influent on the readability of the machine readable identifier and/or a label material such as a sheet of material on which the machine readable identifier is located, or the label material's attachment to the frame.

In one or more aspects of the present disclosure, the window covering device comprises one or more components configured to at least partly, such a substantially fully, hide at least a part of the identification item. This may in further aspects render the machine readable identifier inoperable when the covering device is installed at the window.

The visibility/accessibility of the machine readable identifier may hence be reduced when the window covering device is installed at the window, which may provide an aesthetic advantage. This is however of minor significance as the machine readable identifier has so to say "done it's duty" and helped a user to order a covering device fitting the window and configured to be installed by means of the first fastening mechanism(s). However, if the covering device is removed again, the machine readable identifier may be more visible/accessible again, and hence e.g. allow for use again in case of e.g. a replacement of the covering device. The visibility of the machine readable identifier may be reduced at least from the inside of the building when the covering device is installed.

In one or more aspects of the present disclosure, a housing of the covering device, a connection part of the housing, such as the second fastening mechanism and/or one or more guiding rails of the covering device may together or alone provide the hiding of the machine readable identifier.

The hiding of the machine readable identifier may also occur even if the installed covering device is placed at it's substantially fully retracted position to allow as much sunlight as possible to enter through the pane and into the building.

The covering device is in one or more aspects of the present disclosure configured to be installed at the interior of the window facing the interior of the building.

The identification item may in some aspects of the present disclosure comprise visible text or other markings (such as an arrow or the like) indicating the position and/or presence of the machine readable identifier and/or a relation between the machine readable identifier and the first fastening mechanism, to a user. Installation of the window covering device may hide the visible text and/or the marking identifying the machine readable identifier.

In some aspects, the machine-readable identifier comprises a Uniform Resource Locator (URL) representation which is directed to a web address, such as an online store. The URL representation may be encoded as part of the machine-readable identifier so that an end user scanning the machine-readable identifier is presented with the web address, such as via a barcode or QR code scanning software application installed at a smartphone. Such a software application may further be configured to prompt the user to visit the presented web address, such as via an internet browser software application also installed at the smartphone or another handheld electronic device. The window having a machine-readable identifier provides that the end user can be automatically directed to a web address of an online store offering window coverings, which are specifically adapted to different sizes, types and/or generations of the windows e.g. by the window manufacturer.

In some aspects, the machine-readable identifier comprises identification data of the window and/or identification data of the at least one window covering device. Additionally or alternatively, the machine readable identifier may comprise information of the type of first and/or second fastening mechanism The identification data may in some aspects of the present disclosure provide the necessary information for identifying and/or selecting correct covering device for the roof window.

In one or more aspects of the present disclosure, the machine-readable identifier comprises a Uniform Resource Locator (URL) representation configured to provide the identification data to a server at a web address when the machine-readable identifier is read by an automatic identification reader of a mobile user terminal. The mobile user terminal may e.g. be a smartphone and the automatic identification reader a QR code scanner using a camera of the mobile terminal.

E.g. in aspects of the present disclosure, the identification data may be embedded in the Resource Locator (URL) representation information. Hence, the URL representation information may be designed so that a web address retrieved/established based on the (URL) representation information will automatically contain the identification information embedded in the web address. Hereby, the URL representation may be configured so as to provide that the identification data is provided to a server at the established web address when the machine-readable identifier is read by an automatic identification reader of a mobile user terminal. This may e.g. be obtained by a software application of the user terminal which may prompts the user to visit the retrieved web address such as via an internet browser software application installed at the mobile user terminal.

The identification data being provided to a server at a web address by scanning a machine-readable identifier may further provide an enhanced user experience for users that may have a desire of purchasing window accessories for a window.

In aspects of the present disclosure, the Uniform Resource Locator (URL) representation comprises the identification data. The identification data may be part of the web address. Alternatively or additionally, the identification data may be included in the web address as part of a Hypertext Transfer Protocol (http) request to the server, such as by GET request strings. By having the URL representation comprise identification data, providing the identification data to a server at the web address is made possible by using commercially available software applications e.g. for QR code scanning. It is understood that both the URL representation and the identification data are suited for digital representation at a processor, e.g. as a sequence of ASCII characters, and hence their combination can be made to form a valid web address.

In aspects of the present disclosure, the machine-readable identifier comprises a Quick Response (QR) code wherein the Quick Response (QR) code comprises the identification data and in further aspects an URL representation.

The automatic identification reader may be a QR code scanner system provided by means of a camera of the mobile user terminal and a QR code recognition software application installed at the mobile user terminal. Alternatively or additionally, the machine-readable identifier is or may comprise a barcode, such as a two-dimensional barcode, and the automatic identification reader may be a barcode scanner provided by a combination of camera and software of the mobile, handheld user device.

The machine-readable identifier, may generally, according to aspects of the present disclosure, comprise a Quick Response (QR) code, a barcode or a similar visual encoding system. It is understood that an identifier may be a label or marking comprising a plurality of data elements, such as a sequence of numbers, letters or symbols chosen according to an encoding system to represent identification data. Such identifiers being machine-readable may provide that identification data can be decoded by a computer e.g. from digital images depicting the machine-readable identifier taken at a suitable distance and/or viewing angle. Particularly, a number of software applications for QR code scanning are commercially available and suitable for use e.g. with a smartphone.

In other aspects of the present disclosure, the machine-readable identifier may be a radio-frequency identification (RFID) tag or a near-field communication (NFC) tag.

The machine readable identifier may in aspects of the present disclosure comprise information of the window and/or of the window covering device.

In some aspects of the present disclosure, the identification data may comprise one or more of a product type information, product size information, product manufacturing information, product accessory category information and/or product material information related to the window and/or the window covering device. Preferably, the identification data comprises at least a product type and/or a product size related to the window and/or the covering device. The product type and size may be encoded as a sequence of characters, such as by a combination of a few letters and numerals that may have been predetermined by the manufacturer, such as e.g. by constructing a look-up table. The information may be provided directly as-is in the identification data or be represented by predetermined codes. The type information may comprise a window type, a window model identifier, an opening mechanism type and/or a glazing type. The material information may comprise a window frame material, an interior colour, a thermal insulation rating and/or a covering material. The size information may comprise at least a height measurement and a width measurement e.g. of the visible part of the window pane. The product accessory category information may be a window covering device type. The product type and size information may generally be advantageous for identifying and/or selecting correct accessory such as covering devices for windows.

In aspects of the present disclosure, the machine-readable identifier comprises identification data of the window. The machine-readable identifier may comprise physical dimensions and/or a predetermined code corresponding to physical dimensions of the window. The identification data may comprise one or more of a product type information, a product size information, a product manufacturing information, a product accessory category information and a product material information related to the window.

In aspects of the present disclosure, the identification data of the window comprises one or more of window size information, window type information and/or window material information. The identification data of the window may in aspects of the present disclosure comprise at least information of window size and/or a window type. Alternatively or additionally, the identification data may comprise window manufacturing information, such as model year and/or model generation. The identification data provides that the window manufacturer or vendor can reliably identify e.g. the type and/or size of window covering devices which comprise suitable second fastening mechanisms and will fit that specific window.

In some aspects of the present disclosure, the machine-readable identifier comprises identification data of the window covering device. The machine-readable identifier may comprise physical dimensions and/or a predetermined code corresponding to physical dimensions of the window covering device. Alternatively or additionally, the machine-readable identifier may comprise information of the first fastening mechanism of the frame. The identification data may comprise one or more of a product type information, a product size information, a product manufacturing information, a product accessory category information and a product material information related to the window covering device. The identification data provides that the window manufacturer or vendor can reliably identify e.g. the type and/or size of window covering devices to be made available by for purchase e.g. by the end user, and that the end user can be assured that such products fit the respective window size, type and/or generation.

Alternatively or additionally, the identification data may comprise identification information relating to the first fastening mechanism of the frame and/or the second fastening mechanism of at least one window covering device. This may help to ensure that the window covering device is compliant with the physical characteristic of the window by also having matching second fastening mechanisms.

In one or more aspects of the present disclosure, the identification data of the window covering device comprises one or more of an window covering size information, a window covering type information and/or a window covering colour information. Preferably, the identification data comprises at least an window covering size information and/or a window covering type information. The identification data provides that the end user can use a hand held user terminal in order to unambiguously identify e.g. the type and/or size of window covering devices to be purchased from a window manufacturer or vendor based on that information.

In aspects of the present disclosure, the roof wind is a window to be installed at a position different from vertical. By the window being installed at a position different from vertical, e.g. between 15° and 80° with respect to horizontal, the scope of suitable window covering devices may be narrowed significantly, among others due to gravity acting on the covering device in a way that may necessitate a mechanical guiding solution to ensure that the covering device is operated correctly when covering the window pane as desired. Such a mechanical guiding solution may be provided by installing guide rails at the frame for guiding the covering portion of the window covering device.

The roof window may in one or more aspects of the present disclosure comprise a removable representation item comprising a visual representation of the window covering device type. In some aspects of the present disclosure the removable representation item is or comprises is a removable sheet, such as a foil or plastic sheet, which is removably attached to a surface of the window pane.

In one or more aspects of the present disclosure, the roof window may comprise a removable identification item comprising at least one further machine-readable identifier.

The inventors have found that using representation items and identification items which are removable allows for covering large portions of the visible part of the pane temporarily, i.e. until they are removed by a user, without encumbering the operation nor subsequent appearance of the window where the window pane is see-through. By covering a larger portion of the visible part of the pane in this way, the window may provide that the visual representation of the window covering device is of a sufficient size to allow the end user to envisage how the full-size covering device would look. It is advantageous that the visual representation is clearly observable from a distance, such as more than a meter or more than five or more than 10 meters away, because it allows the end user to envisage how the window covering device would look in combination with surrounding interior décor e.g. in case a substantially similar, real covering device is installed. Moreover, the window may provide that the removable identification item is also of a sufficient size to allow the machine-readable identifier to be reliably scanned, e.g. also from distance such as from more than 1 meter or more than 2 meters or 3 meters away from the machine-readable identifier.

The removable identification item comprising a machine-readable identifier provides that an end user can operate a mobile user terminal, such as a smartphone or a similar hand-held device comprising a suitable identification retrieving system, to scan the machine-readable identifier, e.g. via a digital camera, and retrieve the identification data easily. This enables a solution where the user can be presented with one or more covering devices which are compliant with the window in a user friendly way, and may hence help to reduce the risk of wrong purchases of covering devices for the windows at which the representation items and identification items are placed.

The removable representation item may be a removable sheet, such as a foil or plastic sheet, which is removably attached to a surface of the window pane. The removable sheet may be made of a transparent, semi-transparent or translucent material, such as a clear plastic or polymer material, such as softened polyvinyl chloride (PVC), polyethylene terephthalate (PET) protective films or the like.

The removable sheet may be is removably attached to a surface of the window pane, such as e.g. such as e.g. by means of a weak, non-permanent adhesive allowing the representation item to be peeled off the window pane together with the weak adhesive. Preferably, at least the removable representation item is a removable sheet adhering to the window pane surface. Alternatively or additionally, at least one of the removable representation item and the removable identification item is removably or rigidly affixed to the removable sheet, such as by an adhesive layer abutting the removable sheet.

The removable sheet may in one or more aspects of the present disclosure be a protection sheet or film attached to the window pane by means of an adhesive in order to provide mechanical protection of the pane during e.g. packaging, transportation and/or installation of the window. The removable sheet may be an innermost sheet attached directly to the window pane surface by means of a weak adhesive layer. It is contemplated that, for some choices of material of the removable sheet, electrostatic adhesion with the window pane may be sufficient for proper attachment. Typically, the sheet is then removed after installation of the window in a building or the like by peeling the removable sheet off the window e.g. in one piece. However, the machine readable identifier at the frame is maintained and visible when the sash is in a closed position.

In one or more aspects of the present disclosure, the removable representation item comprises the removable identification item. The removable identification item may be a part of the removable representation item, such as by being removably or rigidly affixed to the removable representation item, such as by an adhesive layer abutting the representation item. By the removable representation item comprising the removable identification item, the window may provide that the identification item can be easily removed together with the representation item, such as by peeling the representation item off the window.

In one or more aspects of the present disclosure, the roof window may comprise a window covering device of said type configured to be installed at the window, wherein the window covering device is installed at the window by means of said first fastening mechanism and said second fastening mechanism. The machine readable identifier may here, in further aspects of the present disclosure, be placed visible at a part of the frame when the sash is closed, and at least when the window covering device is detached from the window. In some aspects, one or more components of the window covering device may at least partly, such a substantially fully, hide the machine readable identifier when installed at the window, e.g. by means of one or more components of the window covering device.

The present disclosure additionally relates to a method of installing a window covering device at a roof window for a building, such as a roof window according to any of the above mentioned aspects, wherein the window comprises:
- a window pane and a frame, wherein the pane is arranged in the frame, wherein the frame comprises a movable sash connected to a fixation frame by means of a hinge system, wherein the hinge system allows the sash to be opened and closed relative to the fixation frame, and wherein the frame, such as the sash, comprises at least one first fastening mechanism, and
- an identification item comprising at least one machine-readable identifier, wherein the machine readable identifier is placed visible at a part of the frame when the sash is closed,
wherein the method comprises the steps of
providing at least one window covering device of a type which is suitable for being installed at the window by means of the first fastening mechanism and comprising a second fastening mechanism,
installing the window covering device at the window by engaging the first fastening mechanism with the second fastening mechanism, so that one or more components of the window covering device at least partly, such a substantially fully, hides at least a part of the identification item.

In some aspects of the present disclosure, the installed covering device may render the machine readable identifier inoperable in the sense that the machine readable identifier is covered to an extent where a user device cannot access the information/data on the machine readable identifier, If the machine readable identifier for example is a QR code or a barcode, the installed covering device may hide the identifier information to an extent where a camera cannot sufficiently read the information in/at the machine readable identifier.

In one or more aspects of the method, the machine-readable identifier comprises identification data, wherein the identification data enables identification of at least one window covering device of a type which is suitable for being installed at the window by means of the first fastening mechanism and comprises one or more of said second fastening mechanism.

In one or more aspects of the present disclosure, one or more of a housing of the covering device, the second fastening mechanism, and a guide rail provides said hiding of the machine-readable identifier.

### Brief description of the drawings

Aspects of the present disclosure will be described in the following with reference to the accompanying drawings in which exemplary embodiments are shown, wherein:
Figure 1 illustrates a window comprising a frame, a window pane arranged in the frame, a removable representation item comprising a visual representation covering a part of the pane and a removable identification item comprising a machine-readable identifier according to embodiments of the present disclosure.
Figure 2 illustrates a window comprising a frame, a window pane arranged in the frame and a removable representation item comprising a removable identification item according to further embodiments of the present disclosure.
Figure 3 illustrates a window comprising a frame, a window pane arranged in the frame, a removable representation item and a removable identification item arranged at separately removable abutting layers provided at a removable sheet according to one or more embodiments of the present disclosure.
Figure 4 illustrates a perspective view of a window in the form of a pivot roof window comprising a hinge system and window covering device mounted at the window according to one or more embodiments of the present disclosure.
Figure 5 illustrates a side view of a window in the form of a top-hung roof window comprising a hinge system and a window covering device mounted at the window according to one or more embodiments of the present disclosure.
Figure 6 illustrates a window system comprising a plurality of windows comprising a first set of windows and a second set of window with each window having physical characteristics according to embodiments of the present disclosure.
Figure 7 illustrates a portion of a window, such as e.g. illustrated in Figures 1-5, with a machine-readable identifier comprising a URL representation configured to provide identification data to a server at a web address when the machine-readable identifier is read by an automatic identification reader of a mobile user terminal.
Figure 8 illustrates a window such as a roof window with a permanent machine readable identifier and first fastening mechanisms.
Figure 9 illustrates a roof window with a machine readable identifier a first fastening mechanism, where the machine readable identifier is visible when the sash is closed.
Figure 10 illustrates a corner of a window with permanent machine readable identifiers arranged visible when the sash is closed.

### Detailed description

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

While the present disclosure has been described in detail in connection with only a limited number of embodiments or aspects, it should be readily understood that the present disclosure is not limited to such disclosed embodiments or aspects. Rather, the present disclosure can be modified to incorporate any number of variations, alterations, substitutions or equivalent arrangements not heretofore described, but which are commensurate in scope with the present disclosure. Additionally, while various embodiments or aspects of the present disclosure have been described, it is to be understood that aspects of the present disclosure may include only some of the described embodiments or aspects or combinations of the various embodiments or aspects. Accordingly, the present disclosure is not to be seen as limited by the foregoing description.

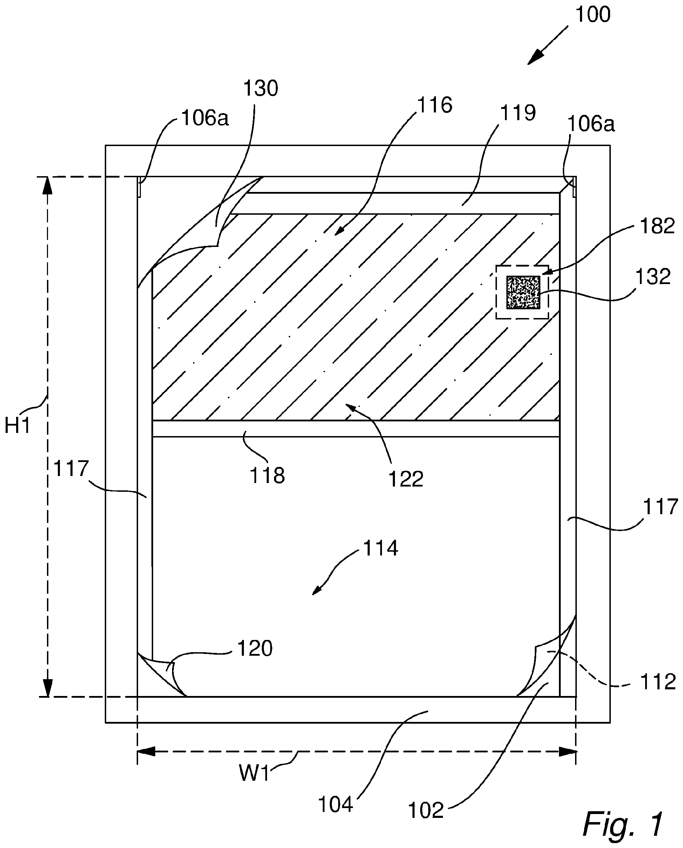

Figure 1 is a graphical illustration of a window 100 for a building, such as an architectural window, according to one or more embodiments of the present disclosure. The window 100 is shown with a window frame 104 and a window pane 102 arranged in said window frame 104. The pane 102 is shown as a substantially rectangular glass panel and has a visible part adjoining the frame, where the visible part is shown as a rectangle defined by a height H1 and a width W1. The frame 104 is shown comprising two first fastening mechanisms 106a provided at the upper corners of the frame 104 for mounting accessories, such as covering devices.

A removable representation item 120, such as a printed plastic film, is shown removably attached to the surface of the window pane 102 at an interior side of the window 100. The representation item 120 is attached to the surface of the window pane 102 by a weak adhesive film (not illustrated) between the representation item 120 and the pane 102. The representation item 120 is shown comprising a visual representation 122 of a window covering device 110 (not illustrated) installed at the window 100. The removable representation item 120 is shown covering the visible part of the window pane 102, so that a display part 116 of said covered area provides the visual representation 122 and a clear part 114 provides a substantially unhindered view through the pane 102. The display part 116 is shown as opaque and/or generally less transparent than the clear part 114, which is transparent or at least translucent. The visual representation 122 illustrates two guide rails 117, a grip profile 118 and a housing 119 of the window covering device 110 (not illustrated). The guide rails 117 are shown extending along a longitudinal extent of the window frame 104, where the visible part of the pane 102 meets the window frame 104. The grip profile 118 is also shown extending along a transversal and/or substantially horizontal direction across the pane 102 between two opposite sides of the window frame 104. As shown here, the visual representation 122 hereby provides a decent two-dimensional mock-up of the window covering device 110 (not illustrated) in the form of interior blinds as they would appear if installed at the window 100 and viewed through the pane 102. It is contemplated that the display part 116 could have a printed pattern or be otherwise textured to look like a textile or a non-woven fabric typically used in roller blinds. Further, the visual representation 122 shown need not be photorealistic nor provide a complete graphical rendering or reproduction of the type of window covering device 110 (not illustrated) illustrated by the visual representation 122, as long as the user is helped to a reasonable understanding of how the window 100 would look with that type of window covering device 110 (not illustrated) installed at the window 100.

The two-dimensional mock-up may be a three-dimensional model representation of the window covering device projected onto an image plane, such as the image plane represented by the window pane as seen from a viewing perspective of the user.

A removable identification item 130 is likewise shown removably attached at the surface of the window pane 102 at an interior side of the window 100. Similarly, the identification item 130 is attached at the surface of the window pane 102 by a weak adhesive film (not illustrated), such as between the identification item 130 and the representation item 120 or between the identification item 130 and the pane 102. The removable identification item 130 is shown comprising at least one machine-readable identifier 132. The machine-readable identifier 132 provides machine-readable data, such as window identification data or data relating to the window manufacturer or a vendor, which helps to improve the user experience when an end user wants to order window accessories, such as window covering devices, by using or relaying the data. The machine-readable identifier 132 of the present embodiment is a QR code which comprises data in the form of a web address 182 which is directed to an online store. At this online store, consumers like the end users can purchase window accessories, such as interior blinds, suitable for that window 100. By directing the end user to an online store specifically offering for sale that type of window covering device 110 (not illustrated) which is illustrated by the visual representation 122 at the window 100, the end user may be provided with an enhanced user experience by both being assured that the type fits the window 100 and understanding how it will look.

A removable sheet 112 is shown removably attached the surface of the window pane 102 at an exterior side of the window 100 and arranged to be substantially opposite the removable representation item 120 and/or the removable identification item 130. Optionally, the removable sheet 112, such as clear plastic or polymer film, shown here removably attached over at least the visible part of the window pane 102, such as over the removable representation item 120, may be separately removed after the installation of the window e.g. by a glazier prior to the end user viewing the visual representation 122. It is contemplated that clear and durable removable sheets 112 may be arranged as two outermost protective layers entirely covering the visible part of the pane 102, and that the removable sheets 112 may be peeled off while leaving the removable representation item 120 and/or the removable identification item 130. Such an arrangement of removable sheets 112 may provide that neither the pane 102, the removable representation item 120 nor the removable identification item 130 are damaged during packaging, transportation and/or installation of the window 100.

The removable representation item comprising a visual representation of a window covering device may e.g. help to provide that an end user is able to envisage how the covering device of the type represented by the visual representation will look when installed at the window.

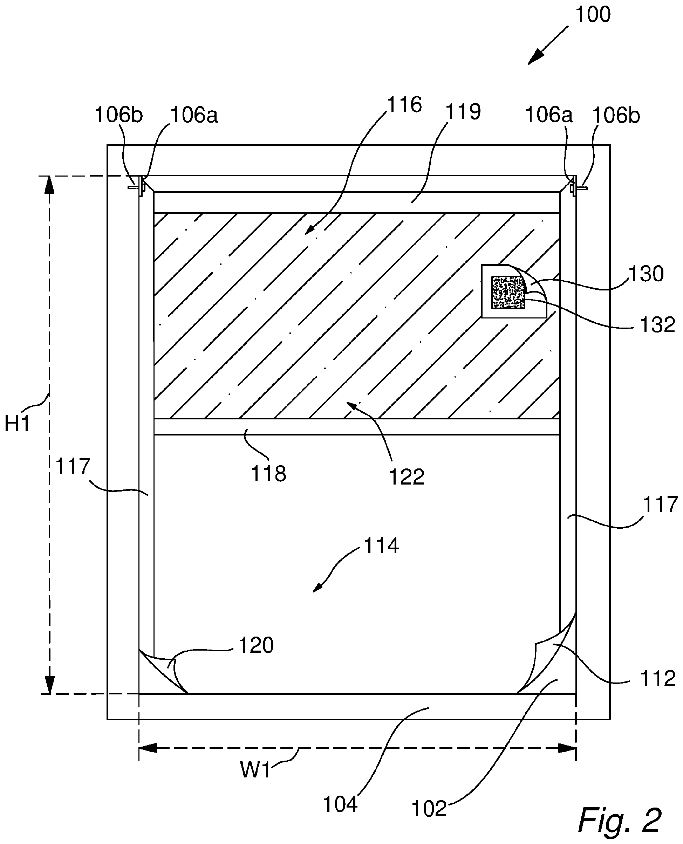

Figure 2 is a graphical illustration of a window 100 in an embodiment of the present disclosure, wherein the window 100 comprises a frame 104, a pane 102 arranged in the frame 104 and a removable representation item 120. The representation item 120 likewise comprises a visual representation 122 of a window covering device 110 (not illustrated) installed at the window 100 at a display part 116, as e.g. also described in relation to Fig. 1 above. The removable representation item 120 is shown comprising a removable identification item 130, which covers only a fraction of the display part 116 which provides the visual representation 122. The frame 104 is likewise shown comprising two first fastening mechanisms 106a provided at the upper corners of the frame 104 for mounting a type of window covering device 110 (not illustrated) and the upper corners of the visual representation 122 here illustrate two corresponding second fastening mechanisms 106b, such as screws for rigidly affixing a pair of brackets to the window frame 104.

A removable sheet 112, such as a foil or plastic sheet, is shown removably attached to a surface of the window pane 102 at an interior side of the window 100. The sheet 112 is attached to the surface of the window pane 102 by a weak adhesive film (not illustrated) between the sheet 112 and the pane 102, so that the removable sheet 112 provides a protective layer covering the entire visible part of the window pane 102. The removable representation item 120 shown here is a part of the removable sheet 112 attached at the window pane 102, such as by the removable representation item 120 being a thin film of ink or colour pigment printed on the removable sheet 112. The removable sheet 112 hereby provides that the representation item 120 and/or the identification item 130 can be removed from the window pane 102 without residue.

The removable representation item 120 is shown removably attached to the surface of the window pane 102 at an interior side of the window 100, as e.g. also described above in relation to Fig. 1, but the removable identification item 130 is here shown removably attached to the removable representation item 120, such as with a weak adhesive between at the identification item 130 and the representation item 120. The removable identification item 130 also comprises a machine-readable identifier 132 and is generally smaller, as e.g. compared to the removable identification item 130 described above in relation to Fig. 1, such as e.g. a 10 x 10 cm QR code sticker. By the removable identification item 130 being removable attached to representation item 120, the end user may peel off this identification item 130 to use the machine-readable identifier 132 elsewhere and leave the representation item 120 in place. This may provide the advantage that the window 100 is left with a general appearance of having a window covering device 110 (not illustrated) installed at the window 100 due to the visual representation 122 while the end user waits for the purchased type of window covering device 110 (not illustrated) to arrive and/or be installed.

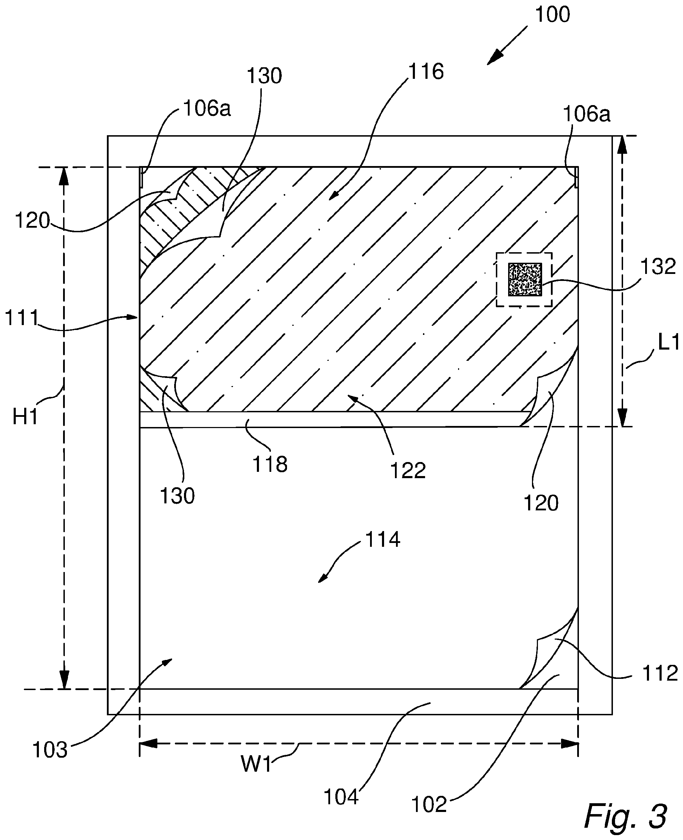

Figure 3 is a graphical illustration of a window 100 in another embodiment of the present disclosure, wherein the window 100 likewise comprises a frame 104, a pane 102 arranged in the frame 104 and a removable representation item 120. Further, the representation item 120 comprises a visual representation 122 of a window covering device 110 (not illustrated) installed at the window 100 at a display part 116, as e.g. also described in relation to Figs. 1-2 above. The removable representation item 120 is shown comprising a removable identification item 130, which covers a majority of the display part 116 which provides the visual representation 122. Here, the window covering device 110 (not illustrated) illustrated by the visual representation 122 also comprises a grip profile 118 but no guide rails 117 or housing 119 is shown.

A removable representation item 120 is shown covering an upper part of the pane 102 and/or the removable sheet 112. The removable representation item 120 extends along a length L1 measured from the top of the window frame 104 to the bottom of the grip profile 118 illustrated by the visual representation 122 of the representation item 120 as placed at the window. The length L1 is generally less than the height H1 of the visible part 103 of the pane 102, and typically a considerable fraction, e.g. 1/2, to display the covering part 111 of the window covering device 110 (not illustrated).

A removable sheet 112, such as a foil or plastic sheet, is shown removably attached to a surface of the window pane 102 at an interior side of the window 100. The sheet 112 is attached to the surface of the window pane 102 by a weak adhesive film (not illustrated) between the sheet 112 and the pane 102, so that the removable sheet 112 provides a protective layer covering the entire visible part of the window pane 102.

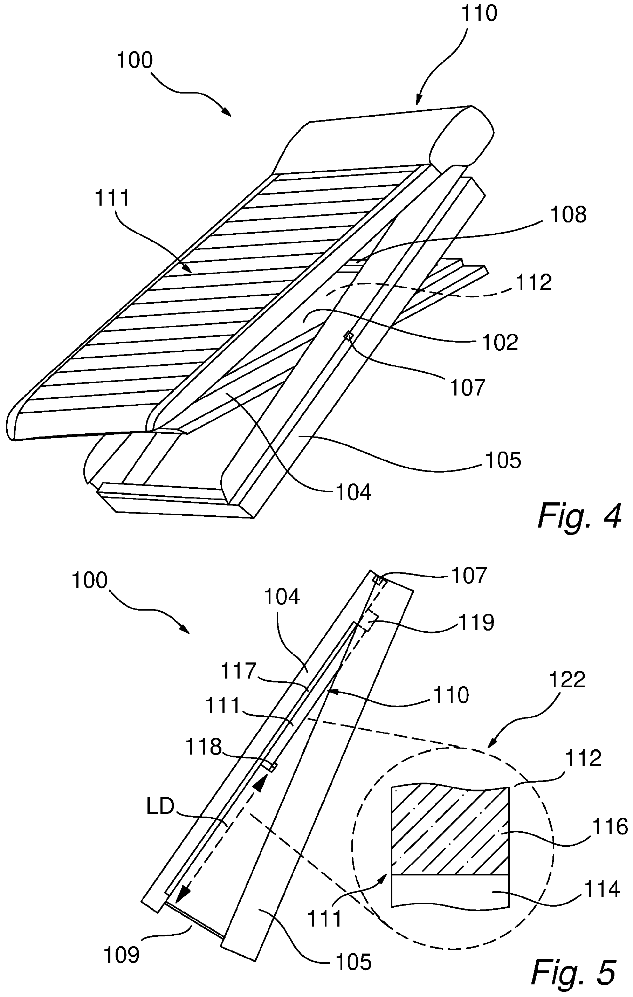

Figure 4 is an illustration of a perspective view of a window 100 to be installed at a roof of a building. The roof window 100 comprises a window frame 104, a pane 102 arranged in the frame 104, a hinge system 107 arranged between the window frame 104 and a fixation frame 105 arranged to receive the frame 104. In the example of Fig. 4, the roof window 100 is a pivot roof windows comprising pivot hinges 107 providing an axis of rotation between the top and bottom end of the frame 104. The pivot roof window 100 comprises a frame 104 in the form of a movable sash 108, which is connected to the fixation frame 105 by means of the hinge system 107, such as one or more hinged connections configured to allow the sash 108 to move relative to the fixation frame 105. Often the axis of rotation is substantially about the centre, but sometimes the axis of rotation can for example be raised such as 1/3 of the total window or sash height. The hinge system 107 is arranged so that a top end part of the sash 108 is configured to move inwards while a bottom end part of the sash 108 is configured to move outwards when opening the window 100 from a closed position.

The roof window 100 is configured to be placed in a roofing structure of a building, such as a building for habitants, an office building or the like. The roof window 100 may in embodiments of the present disclosure be arranged between two roof trusses, but may in further embodiments also be arranged at another part of the roof structure. The pivot roof window 100 may either be configured to be arranged with an angle between 5° and 85°, such as between 10° and 75°, compared to horizontal, so that rain and melting water, dew and the like will be guided towards a bottom end part of the pivot roof window 100 due to gravity without permitting water ingress.

A pivot roof window 100 may e.g. allow partial rotation of the movable sash 108 so the surface of the window pane 102 at an exterior side of the pivot roof window 100 may be cleaned from the inside. The weather proofing and water drain for such roof windows 100 should be carefully designed, especially for pivot roof windows 100 that can be opened, which may affect the availability of compatible architectural coverings that can be installed at the respective type of pivot roof window 100.

The pivot roof window 100 is shown with an architectural covering installed at an exterior side. The architectural covering is shown as a window covering device 110, which in the present example is a roller shutter, but it may also be a blind such as a venetian blind, a roller blind or the like in further embodiments. The roller shutter may be electrically operated by means of an electric motor (not illustrated), so as to open or close the roller shutter and controlled by an automation solution and/or by means of a wired or wireless remote control. As can be seen, the roller shutter can be placed at the exterior side of the window, and a covering part 111 can be extended or retracted along a longitudinal direction of the window covering device 110 while at least a housing of the window covering device 110, e.g. at the top end part, remains stationary. It is understood that in further embodiments of the present disclosure, the roller shutter and/or other types of architectural coverings may be omitted from the window 100. The window pane 102 may instead be covered by a removable sheet 112 to provide a visual representation 122 (not shown) of at least the covering part 111, as e.g. described above in relation to Figs. 1-3, to be viewed by an end user.

Figure 5 is an illustration of a side view of a roof window 100 according to another embodiment of the present disclosure, wherein the roof window 100 is a top-hung roof window. The top-hung roof window 100 comprises a window frame 104, a pane 102 (not shown) arranged in the frame 104, a hinge system 107 arranged between the window frame 104 and a fixation frame 105 arranged to receive the frame 104. Here, the frame 104 is connected to the fixation frame 105 at the top part by a hinge system 107, and the top part of the frame 104 does not pivot inwards when the window 100 is opened from a closed position. A latch mechanism 109 is shown at the bottom part of the frame 104, where the latch mechanism 109 is engaged with a corresponding receiving mechanism (not shown) at the bottom part of the fixation frame 105 so that the window 100 can be mechanically actuated, shut or held in position.

Generally, for some types of roof windows 100, such as e.g. illustrated in relation to Figs. 4 and 5 above, the roof window 100 may be installed with an electric actuator (not shown) such as a spindle actuator or chain actuator. The electric actuator can be controlled or operated via input from an automation system or a user interface via a wired or wireless remote control to open or closed the window 100. Similarly, some types of window covering devices 100, such as roller blinds or exterior shutters, may be installed with an electric actuator which can be controlled or operated in this way.

The top-hung roof window 100 is shown with an architectural covering installed at an interior side. The architectural covering is shown as a window covering device 110, which in the present example is roller blinds, but it may also be venetian blinds, slats or the like in further embodiments. The window covering device 110 is shown with a covering portion 111 drawn approximately mid-way between the top part and bottom part of the window frame 104 along a longitudinal direction LD. The window frame 104 has one or more guiding rails 117 for guiding at least the covering portion 111 and to keep the covering part 111 along the length of the window frame 104. The window covering device 110 comprises a housing 119 for enclosing the unexpended part of the covering portion 111 and a grip profile 118 for grabbing and moving the covering portion 111, such as by linear extension during manual operation by a user.

The circular inset in Fig. 5 shows a visual representation 122 of the window covering device 110 installed at the top-hung roof window 100 as it would look when viewed from an interior side of the top-hung roof window 100 by an end user. Such a visual representation 122 may be provided at a removable sheet 112 attached to the window pane 102 (not shown) of the top-hung roof window 100, as e.g. described in relation to Figs. 1-3 above. The removable sheet 112 has a display part 116, which provides a graphical representation of at least the covering portion 111 of the window covering device 110. The removable sheet 112 also has a clear part 114, which may provide a substantially unhindered view through the pane 102 (not shown). It is understood that, a removable representation item 120 (not shown) and a removable identification item 130 (not shown) may be provided e.g. by the removable sheet 112 being a foil or plastic sheet removably attached to a surface of the window pane 102 (not shown), whereby one or more of the effects or advantages discussed above may be provided.

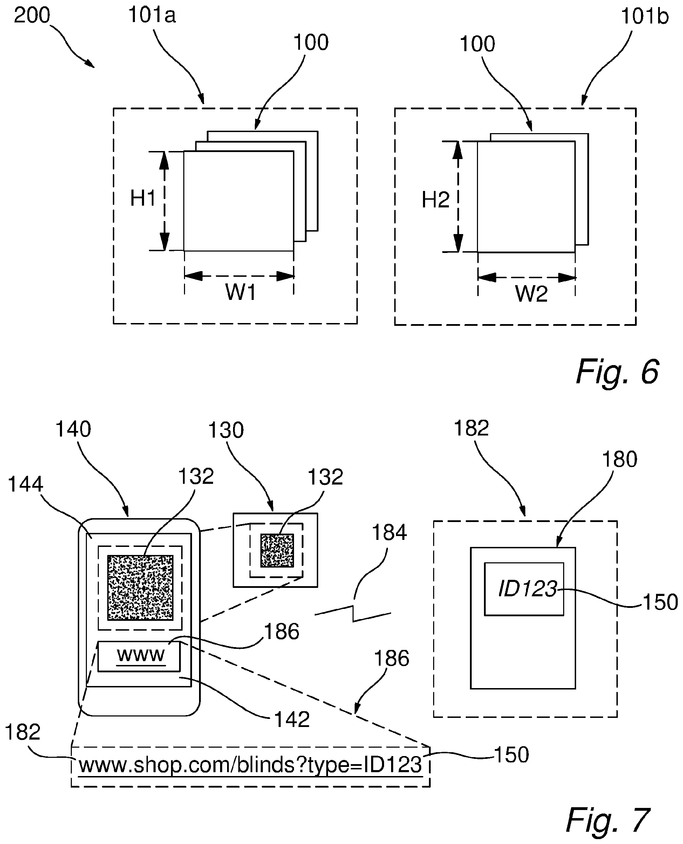

Figure 6 is a graphical illustration of a window system 200 comprising a plurality of windows 100, such as at least ten windows 100, such as more than 50 windows 100. The plurality of windows 100 comprises a first set of windows 101a, here shown as three identical windows 100 of a first size, and a second set of window 101b, shown as two identical windows 100 of a second size. Each window 100 is shown having physical characteristics comprising a height H1,H2 and a width W1,W2 according to embodiments of the present disclosure, such as e.g. described in relation to Figs. 1-3. It is understood that the first size is described at least in part by height H1 and width W1 measured as shown for the three identical windows 100 of the first size. Further, the second size is described at least in part by height H2 and width W2 measured as shown for the two identical windows 100 of the second size, and it is understood that the second size being different from the first size may include that at least the height H1 is different from the height H2 or the width W1 is different from the width W2.

Figure 7 is a graphical illustration of a removable identification item 130 from a portion of a window 100 according to one or more embodiments of the present disclosure, such as e.g. illustrated in relation to Figs. 1-5 above, with a machine-readable identifier 132 being read by an automatic identification reader 142 of a mobile user terminal 140, such as a smartphone held and/or operated by a user. The machine-readable identifier 132 may be scanned and read automatically or manually as a result of user interaction via a user interface at the mobile user terminal 140. The machine-readable identifier 132 is shown as a QR code, which can be scanned by the mobile user terminal 140 recording or receiving a digital image of the QR code via a digital camera, such as typically provided in a smartphone, tablet or the like.

A display 144 is provided at the mobile user terminal 140 so that an automatic identification reader 142 installed at the mobile user terminal 140 may provide information and/or enable user interaction, such as via a touch screen interface. It is understood that the mobile user terminal 140 may comprise a hardware processor and other electronic components for carrying out the functions e.g. described above, such as performing QR code recognition, data processing and information retrieval, such as providing information and/or enabling user interaction at the display 144.

It is naturally generally understood that the mobile user terminal 140 may comprise data communication means, such as adapted for WIFI, Bluetooth^{®}, mobile data such as 3G, 4G, or 5G data communication and/or any other suitable data communication means, in order to be able to communicate with servers and the like.

The machine-readable identifier 132 is shown comprising a URL representation 186. The URL representation 186 is shown configured to provide identification data 150, such as e.g. window identification data relating to the window 100 from which the identification item 130 was removed, to a server 180 at a web address 182 by the web address 182 and the identification data 150 forming a http GET request string. The server 180 may fulfil the http GET request by providing a web page result which is based at least in part on the identification data 150 to provide the user with an improved the user experience for users that may have a desire of purchasing window accessories, such as window covering devices 110, for the respective window 100.

In one or more aspects of the present disclosure, the server 180 may comprise a computer-readable storage medium, which stores a plurality of digital records of, or relating to, a plurality of window covering devices which may be presented to and/or purchased by a user based on the provided identification data. In some aspects, each digital record may uniquely represent at least one type of window covering device. In some aspects, there may be a one-to-one correspondence between the digital records and the uniquely represented types of window covering devices. Alternatively or additionally, each window covering device may be represented by a digital record at a database, e.g. located at the server 180. The plurality of digital records may be arranged in a database e.g. to allow for efficient searching and look-up of window covering devices based on the identification data. The database may be stored on the computer-readable storage medium in a suitable data format, such as according to a Structured Query Language (SQL) data format, to allow for fast data manipulation and retrieval via a hardware processor, such as via query strings provided in the form of Structured Query Language (SQL) commands.

The server 180 comprises a hardware processor, which is configured to receive a digital representation of identification data of, or relating to, the at least one window. This message/digital representation comprises or is based on the provided Uniform Resource Locator representation of a web address that is based on destination data and the identification data, and which identification data may be transmitted by a web application of the user terminal, such as an internet browser, installed at the user terminal.

The transmitted message may represent identification data and a URL representation may be a digital signal, such as a sequence of ASCII characters etc., such as a Transmission Control Protocol (TCP) data transfer, or any form of data stream suitable for reliably exchanging data. By receiving a message representing the identification data at the server 180, a remote order system at or communicating with the server 180, this may enable the server to provide a remote ordering service that responds to user-prompted requests, e.g. in the form of a message transmitted from the user terminal. A remote ordering service may include providing individualized replies to the requests, as may generally be preferable when offering products for sale via an online store.

The hardware processor of the server 180 may be configured to identify at least one matching digital record among a plurality of digital records based on the identification data. It is understood that the message representing identification data may not be required to contain all the information of the originally transmitted identification data transmitted from the user device, and that information provided to the server may consist of a minimal amount of information required for the hardware processor of the server to sufficiently identify at least one matching digital record based thereon. A digital record may for example be identified as matching the identification data if the digital record is of, or relates to, a window covering device of a type which is known to fit the window, e.g. by the at least one window being of a certain type and/or size and/or comprises a specific type of first fastening mechanisms. Alternatively or additionally, identifying at least one digital record as matching the identification data may be based on other criteria, such as relating to an aesthetic aspect or a general user preference. For example, if identification data of the at least one window identifies a colour of the window frame or a preferred colour of a covering part of the covering device, the hardware processor may be configured to employ an identification criterion based thereon.

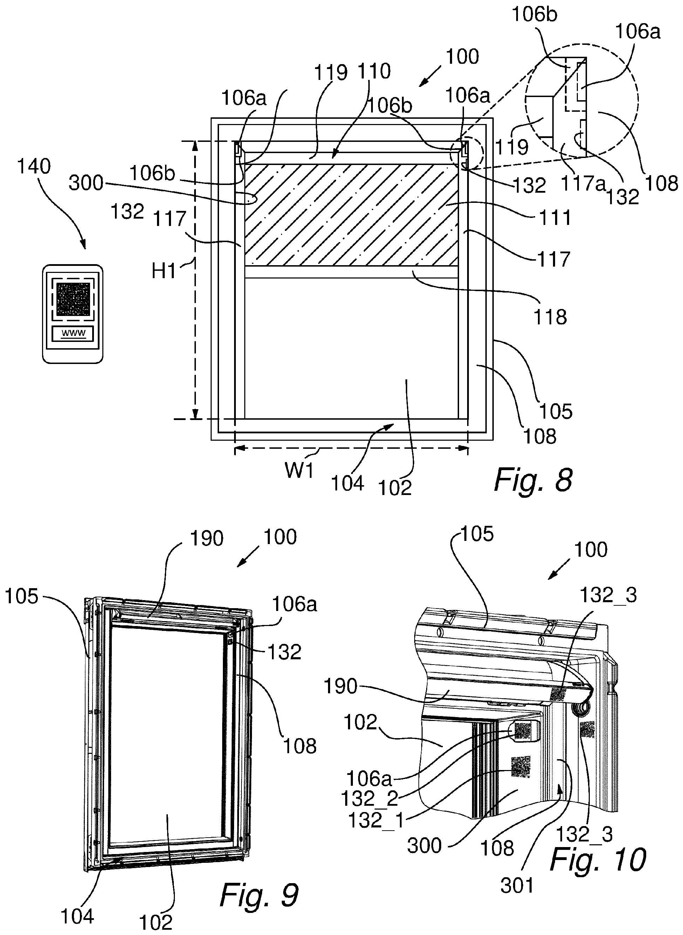

Figure 8 illustrates schematically a window 100 according to embodiments of the present disclosure, with a window covering device 110 installed. The window covering device may here be an interior blind such as a roller blind or pleated blind or venetian blind i.e. covering device types.

The window 100 comprises a frame comprising the fixation frame 105 connected to a sash 108 by means of a hinge system (not illustrated in fig. 8). The frame moreover comprises first fastening mechanisms 106a, in this case two first fastening mechanisms, as e.g. previously disclosed, which engage with a second fastening mechanism 106b of a window covering device. Additionally, an identification item, such as a label, comprises a machine-readable identifier 132. The machine-readable identifier 132 may comprise identification data 150 of the window 100, of at least one window covering device 110 and/or of the first and/or second fastening mechanism. The identification data enables identification of at least one window covering device 110 of a type which is suitable for being installed at the window by means of the first fastening mechanisms 106a and comprises one or more of said second fastening mechanism 106b. The machine-readable identifier 132 is placed visible at a part of the frame 104 when the sash is closed, at least when the covering device 110 is not installed at the window.

It is generally understood that the machine readable identifier 132 may comprise the information as previously described in accordance with one or more embodiments described above with respect to one or more of figs. 1-7. However, the machine readable identifier 132 illustrated may be configured to be permanently maintained at the frame, such as by means of one or more of printing, an adhesive and/or one or more mechanical fasteners, such as by being a permanent label affixed to the frame. The machine readable identifier may thus be a permanent machine-readable identifier 132 in the sense that it is configured/adapted to be maintained visible at a part of the frame 104 when the sash is closed. The machine-readable identifier 132 may hence be scanned and read automatically or manually as a result of user interaction via a user interface at the mobile user terminal 140.

The machine readable identifier 132 may be configured as a permanent label designed for "one-time application". It may be provided by a permanent printing solution where printing of the machine readable identifier is provided directly on the frame surface, or by use of a strong adhesive that creates a strong, or permanent, bond between a label material comprising the machine readable identifier, and the frame surface. The label material may in embodiments of the present disclosure comprise a foil, plastic sheet, a polymer plate or metal plate and/or the like. Mechanically fasteners such as nails, screws or pop rivets may additionally or alternatively be used for securing the identification item to the frame.

**In** some embodiments, the identification item may comprise the machine readable identifier being printed directly on the frame surface. **In** case an adhesives is used, the degree of "permanence" may be determined by a combination of the adhesive, surface material to which it is attached, and the like. An adhesive used for the permanent label may provide a secure bond to the surface material while accommodating the environmental conditions for the window, such as resistance to temperature changes, rather high temperatures, such as above 70°C, moisture, chemicals during window cleaning by means of liquid and possible detergents over the lifetime of the window and/or the like.

A permanent label may be of a different configuration than a removable label solution (e.g. as described with respect to the above mentioned removable representation item and/or removable identification item described in relation to one or more of figs. 1-7) that may instead use e.g. specialized adhesives that may provide a relatively secure bond to a surface material of the frame, yet allowing the label to be easily removed without leaving adhesive residue, damaging the surface, possibly also without tearing a label material.

The permanent label may in one or more embodiments of the present disclosure be configured to be resistant to sunlight and/or cleaning liquids such as water comprising a certain amount of detergent (e.g. below 5% detergent by weight) such as soap based detergent and/or alcohol. Hence, at least 25 cleanings, such as at least 100 cleanings of the surface of the pane arranged at the same side of the window as the label, and the frame part holding the identification item, may not influent on the readability of the machine readable identifier and/or a label material such as a sheet of material on which the identifier is located, or the label material's attachment to the frame. Hence, the machine readable identifier may be configured to be maintained and machine readable during at least 60%, such as at least 80% of the lifetime of the window.

The machine-readable identifier 132 is may as previously described comprise a QR code, barcode, a radio-frequency identification (RFID) tag or a near-field communication (NFC) tag. This can be scanned by a mobile user terminal 140 as previously described that may e.g. record or receive a digital image of the QR code via a digital camera, such as typically provided in a smartphone, tablet or the like. In some aspects, it may be preferred that the machine-readable identifier 132 is may comprise a QR code, barcode or the like that may be read by means of a camera on a mobile, hand held user terminal 140.

In fig. 8, it is understood that the covering device, in this case in the form as a blind such as a roller blind, may have been ordered/purchased by means of reading the identification reader 132 as e.g. previously explained, such as by reading the permanent, visible machine readable identifier, (by a hand held user device/terminal 140) and installed at the window by means of the fastening mechanisms 106a and 106b. The installed covering device comprises a covering portion 111, such as a fabric, polymer sheet or slats of a venetian blind. Moreover, the covering device may also as illustrated comprise one or more guiding rails 117 for guiding the covering portion 111 along the length H1 of the window 100. The covering device additionally comprises a housing 119 for e.g. enclosing the unexpended part of the covering portion 111 and/or the covering device may comprise a grip profile 118 for grabbing and moving the covering portion 111 by hand and/or for providing improved control of the covering portion. The covering device may also comprise a drive unit (not illustrated) such as a motor for driving the covering portion between a covering position and a position where the covering portion covers as little of the pane as possible. The drive unit may be placed in the housing. It is understood that the one or more guiding rails 117 are to be considered as a part of the window covering device, if present, and are normally supplied together with the housing 119 and remaining parts of the covering device when purchasing it.

The first fastening mechanism 106a is placed at a surface of the frame, in this case a frame surface 300 facing the frame opening provided by the sash, and through which a user can see through the window pane. In the present embodiment, the machine readable identifier (132) is placed on the same surface 300 of the frame.

The identification item may also comprise a visual indication, such as an arrow, text or the like, that indicate that the functionality of the machine readable identifier is related to the first fastening mechanism and use thereof.

In other embodiments of the present disclosure, the machine readable identifier 132 may be placed at the same frame part/component of the frame, but not necessarily at the same surface as the first fastening mechanism. For example, in aspects of the present disclosure, the machine readable identifier may be placed at a surface neighbouring to a surface 300 at which the first fastening mechanism is placed (see e.g. surface 301 in fig. 10). This may however still be within 0.1 cm to 20 cm from the fastening mechanism.

The window pane 102 comprises a visible part that has a width W1. Accordingly, the window covering device 110 is of a predefined width that is configured specifically to be installed at the window having a said visible part with said width W1. This may especially be relevant in for example roof window applications, as such windows are often made with predefined sizes, and with first connection mechanisms of a preselected type. Roof windows also are often placed in a position different to vertical. Hence, the designing of a blind 110, e.g. a motorized, blind may be rather complex and call for individual adaption which increases the risk of ordering wrong window coverings. By providing the visible identification item at the window, such as a roof window 100, so that the user can see it even if the sash is closed, e.g. from the interior of the building, the user may have an increased chance of ordering the correct blind as the visible identifier may more easily prompt the user to scan the identifier such as a QR code, and hence be presented to the correct information that may be transmitted to a server by means of a user terminal and/or may simply be presented to the user by means of the hand held user terminal 140.

The window covering device comprises one or more components of the covering device 110 such as the guiding rails 117, the second fixation/fastening mechanism 106, the housing 119, and/or the covering part 111 may in embodiments of the present disclosure be configured to at least partly, such a substantially fully, hide at least a part of the identification item such as the machine readable identifier.

This hiding may in some embodiments of the present disclosure be provided so that the machine readable identifier 132, is rendered inoperable when the covering device is installed at the window. In other embodiments, the hiding provided by the covering device may result in that the user may need to get closer to the window or at least make a larger effort to get the hand held user device 140 to a proper location to read the machine readable identifier 132, compared to a situation where the covering device 110 is not installed at the window.

In the embodiment of fig. 8, a combination of the housing 119 and the rail 117 may visually hide the machine readable identifier 132. Hence, a user may see a glimpse of the bottom part of the machine readable identifier 132 if moving to a location to see a part of the frame surface 300 behind the rail 117, but the machine readable identifier is hidden by a part of the rail 117 and the end of the housing so that it is significantly more hidden than before the installation of the covering device. In some further aspects, in case the machine readable identifier is placed further apart from the fastening mechanism 106a (not illustrated in fig. 8), the rail 117 may be be the one covering identifier 132. The rail may comprise an elongated rail part that extends at least partly or fully in over the surface 300 and hence hides a part of the identifier 132. In Other embodiments, the rail 117 may merely comprise the rail part 117a that may extend in over a part of the otherwise exposed part of the pane to provide a space between the rail and the pane for guiding the covering part 111. Also this rail part 117 may provide said hiding of the machine readable identifier 132.

Generally, it is understood that the hiding by means of the covering device 110 may provide that it may be harder to visually see, with human eye, the machine readable identifier 132 from the inside of the building, compared to if the window covering device is not present.

However, if the covering device is removed again, the machine readable identifier may be more visible/accessible (i.e. less hidden) again, and hence allow for use again in case of e.g. a replacement of the covering device. The visibility of the machine readable identifier may be reduced at least from the inside of the building when the covering device is installed.

The covering device in fig. 8 is installed at the interior of the window facing the interior of the building.

The identification item may in some embodiments of the present disclosure (not illustrated in fig. 8) comprise visible text or other markings, such as arrows or other symbols, indicating the position and/or presence of the machine readable identifier to a user, and/or the purpose of the machine readable identifier. For example, an arrow may be placed on the window frame at a location near and/or between the machine readable identifier 132 and the first fastening mechanism 106a, thereby indicating that the machine readable identifier 132 related to the intended function of the first fastening mechanism 106a

Installation of the window covering device may hide the visible text and/or the marking identifying the machine readable identifier.

The permanent, visible machine-readable identifier may as e.g. previously described, comprise a Uniform Resource Locator (URL) representation as previously explained, which is directed to a web address, such as a web address of an online store. For example, the Uniform Resource Locator URL representation 186 may comprise the identification data 150, such as by the identification data 150 being appended to the web address. For example the machine-readable identifier 132 may comprise a Quick Response (QR) code, wherein the Quick Response (QR) code comprises the identification data 150. Generally, the Machine readable identifier may have substantially the same information embedded therein as the machine readable identifier previously described with regard to one or more of figs. 1-7.

Due to that the size of the covering device, matches the window, and since the device comprises the second fastening mechanism(s) 106b matches the first fastening mechanism(s), this may help to provide a more easy installation of the covering device. Hence, the user first uses a hand held user terminal such as a smartphone to scan the visible identifier. This may provide sufficient information for the user to be able to obtain the correct window by reading the obtained and decoded information on a screen of the user device. In further embodiments, the user interface may propt the user to visit a web address, where one or more covering devices of the correct size and having the correct second fastening mechanisms (106b) are automatically presented to the user through the screen of the user terminal 140, and may preferably also be accessible for purchasing at the web page in case the web page is an online store.

After the user has purchased and received the covering device 110, the method of installing the window covering device at the window 100 comprising the scanned (permanent and/or removable) machine readable identifier 132 may be provided. This installation method may comprise, in a first step, providing the received/purchased covering device. This will, due to the information of the machine readable identifier being used during the purchasing of the covering device, be of a type (such as roller blind, pleated blind, roman blind) which is configured to be installed at the window by means of the first fastening mechanism 106a and comprising a second fastening mechanism 106b that is configured to engage with the first fastening mechanism(s) of the window.

Then the covering device is installed at the window by engaging the first fastening mechanism with the second fastening mechanism 106a, and this fixates the covering device at the window. Screws may in certain embodiment subsequently be provided into the frame in order to fixate the covering device more firmly at e.g. the sash. Moreover, in further embodiments, the installation may also comprise installing the guiding rails along the frame, such as along the sash, of the frame. This may be done by means of one or more of a clips system, one or more screws and/or an adhesive such as tape. Also, some flexible guiding mediums (not illustrated) such as strings, wires, belts or the like may be extended from the housing and towards the bottom of the sash, e.g. behind the rails 117 between rail and pane, in order to be able to provide a more easy guiding of the covering part 111 of the covering device, and/or enable motorized operation of the covering device.

After installation, one or more components 117, 106b, 119, 111 of the window covering device may at least partly, such a substantially fully, hide at least a part of the identification item as previously explained.

Fig. 9 illustrates schematically and in perspective a roof window according to embodiments of the present disclosure, before a covering device is installed. The roof window hence comprises the machine readable identifier 132 that is visible on the frame when the sash is closed, and is here located at the sash near the machine readable identifier 132. Additionally, the roof window frame 104 comprises the first fastening mechanism 106a such as a bracket, only one is shown in fig 9 due to the view, but it is understood that a further bracket 106a may be placed at the opposing side of the sash. The roof window may also in some embodiments of the present disclosure comprise a handle, 190, in the present case a handle extending along the width of the sash at the upper part of the sash.

The permanent machine readable identifier 132 may be placed at the top part of the window, such as the top part of the sash as illustrated in fig. 8 and 9 (see also fig. 10) as this is near the location of one of the brackets 106a.

Fig. 10 illustrates schematically and in perspective a corner part of a roof window, such as a roof window as illustrated in fig. 9. Here, different locations of a permanent machine readable identifier 132 is illustrated in accordance with the present disclosure.

**In** a first embodiment, the machine readable 132_1 may be placed at the same frame surface 300 of the sash as the first fastening mechanism 106a is placed at/on. This surface faces the frame opening provided by the sash and through which a user will look to see through the pane 102. A machine readable identifier 132 (no illustrated) may additionally or alternatively be placed at another visible surfaceof the sash, such as the surface 301 of the sash.

**In** a second embodiment, the machine readable identifier 132_2 is placed on the first fastening mechanism 106a, in this case on a bracket such as a bracket with which the second fastening mechanism 106b of the covering device is configured to slidably engage. Hence, installing the covering device in the window will automatically, and substantially fully, hide the machine readable identifier 132_2

**In** a third embodiment, the machine readable identifier 132_3 is placed at a surface of the fixation frame.

In a fourth embodiment, the machine readable identifier 132_4 is placed at a surface of the handle 190, such as a surface at least partly facing away from the frame and pane.

It is understood that one or more of the machine readable identifiers 132_1, 132_2, 133_3, 134_4 may be omitted. For example, only one or both of the machine readable identifiers 132_1, 132_2, may be provided.

Common to all of the examples of the machine readable identifiers 132_1, 132_2, 133_3, 134_4 is that they are permanently placed on the frame, and are visible to the human eye, also when the sash is in a closed position, from the inside of the building in which the window is installed.

In one or more embodiments of the present disclosure, the machine readable identifier may be placed in close proximity of the fastening mechanism 106a, for example within 0.1 cm to 20 cm, such as within 0.1 cm to or 15 cm from the first fastening mechanism when the sash is in closed position.

In fig. 10, the identification item comprises at least one machine-readable identifier 132 in the form of a QR code, but it may also in other embodiments comprise a barcode or the like.

As can be seen from especially figs 9 and 10, the window 100 may be provided with the first fastening mechanisms 106a pre-installed and hence ready to receive the covering device 110. The first fastening mechanisms 106a comprises two brackets provided at each opposite frame 104 side having an interior width W1. The brackets 106a are situated at the top of the frame 104. The two brackets may face toward each other. The first fastening mechanisms 106a are configured to at least hold the covering device 110 housing 119, also known as the top rail or cassette. The first fastening mechanisms 106a are preferably minor flat brick and/or wedge shaped elements, which may be mounted by the window manufacturer, without their presence disturbing the overall appearance of the window in case no screening device is mounted.

Generally multiple first fastening mechanisms 106a also known as mounting brackets may be employed such as disclosed by the applicant in one or more of EP1003953, EP1151176, EP1500775, EP2002079, EP3205808 and EP3354839. These comprises improvements that ensure better and more reliable operation, blind removal, better support for different covering devices (venetian blinds, roman blinds, roller blinds etc), support for electric blinds and ease of manufacture and assembly. More enhanced fastening mechanisms 106a, 106b may however be provided with future windows and screening devices.

The first fastening mechanisms 106a may comprise a bracket of a plug kind while the second fastening mechanism 106b may comprise a counterpart bracket of a socket kind. The first fastening mechanisms 106a may as illustrated in e.g. fig 9 and 10 protrude from the frame 104 surface.

The second fastening mechanism 106b may comprise a notch recess in the covering device 110.

The first fastening mechanisms 106a may have/provide a mounting direction. The mounting direction may be perpendicular to the window pane 102 or parallel with the window pane 102. The covering device 110 is passed/slided along the first fastening mechanisms 106a in a sliding fashion and engages the fastening mechanisms 106a. An adapter piece may optionally be provided to connect to the first fastening mechanisms 106a.

The second fastening mechanism 106b is situated on the covering device 110 and slides onto the first fastening mechanisms 106a and preferably has a snap engagement. The covering device 110 has a resilient element such as a spring-loaded pin or an elastic finger (not illustrated) which engage the first fastening mechanisms 106a in the mounted position in order to snap hold the covering device. These resilient elements are provided at the cassette extremes/ends where the second fastening mechanism 106b is situated.

One advantage of the fastening mechanisms 106a, 106b may be that the screening device 110 is held in position by these while the user has both hands free to perform the assembly of side rails 117 and optional cords/wires and perform the remaining installation of the screening device in an inclined roof window under the influence of gravity.

It is generally understood that in some embodiments of the present disclosure,

The window may upon delivery, beyond one or more machine readable identifiers configured to be permanent/maintained on the window, comprise a removable representation item 120 comprising a visual representation 122 of the window covering device 110 to be installed, as e.g. previously disclosed in accordance with one or more embodiments of one or more of figs. 1-7 and/or the description thereto. Additionally or alternatively, the window 100, such as a woof window, may upon delivery comprise a removable identification item 120,130 (see e.g. figs 1-3), comprising at least one further machine-readable identifier 132 as previously described. After removing these removable items, the machine readable identifier 132 described in relation to one or more of figs. 8-10 may however be maintained at the frame for later use by a user.

However it is understood that in some embodiments of the present disclosure, the removable representation item 120 and/or the removable identification item(s) may have been omitted, also upon delivery of the window, so that the window 100 alone comprises one or more machine readable identifiers in the form of one or more machine readable identifier configured to be permanently maintained on the window.

### References

- 100: Window
- 101a,b: Set of windows
- 102: Window pane
- 103: Visible part
- 104: Frame
- 105: Fixation frame
- 106a,b: Fastening mechanism
- 107: Hinge system
- 108: Sash
- 109: Latch mechanism
- 110: Window covering device
- 111: Covering portion
- 112: Removable sheet
- 114: Clear part
- 116: Display part
- 117: Guide rail
- 118: Grip profile
- 119: Housing
- 120: Removable representation item
- 122: Visual representation
- 130: Removable identification item
- 132: Machine-readable identifier
- 140: Mobile user terminal
- 142: Automatic identification reader
- 144: Display
- 150: Identification data
- 180: Server
- 182: Web address
- 184: Communication
- 186: URL representation
- 190: Handle
- 200: Window system
- 300: Frame surface of sash facing the frame opening provided by sash
- 301: Other frame surface of sash
- H1,H2: Height
- L1: Length
- LD: Longitudinal direction
- W1,W2: Width

## Claims

1. A roof window (100), for a building, wherein the window (100) comprises:
- a window pane (102) and a frame (104), wherein the pane (102) is arranged in the frame (104), wherein the frame (104) comprises a movable sash (108) connected to a fixation frame (105) by means of a hinge system (107), wherein the hinge system (107) allows the sash (108) to be opened and closed relative to the fixation frame (105), and
- an identification item comprising at least one machine-readable identifier (132),
wherein the frame (104), such as the sash (108), comprises at least one first fastening mechanisms (106a) configured to engage with a second fastening mechanism (106b) of a window covering device (110),
wherein the machine-readable identifier (132) comprises identification data (150),
wherein the identification data enables identification of at least one window covering device (110) of a type which is configured to be installed at the window by means of the first fastening mechanism (106a) and comprises one or more of said second fastening mechanism (106b),
wherein the machine readable identifier (132) is placed visible at a part of the frame (104, 105, 108) when the sash is closed,
wherein the roof window comprises a window covering device (110) of said type configured to be installed at the window, wherein the window covering device (110) is installed at the window by means of said first fastening mechanism (106a) and said second fastening mechanism (106b), wherein the window covering device (110) is an interior blind,
wherein the window covering device comprises one or more components (117, 106b, 119, 111) that at least partly, such as substantially fully, hide the identification item when installed at the window.

2. A roof window (100) according to claim 1, wherein the at least one first fastening mechanism (106a) is placed at a surface of the frame, wherein the machine readable identifier (132) is placed on the surface of the frame,
and/or wherein the machine readable identifier is placed on the first fastening mechanism.

3. A roof window (100) according to claim 1 or 2, wherein said type of window covering device (110) comprises a blind with a covering portion (111) and one or more guiding rails (117) for guiding at least the covering portion (111) and to keep the covering part (111) along the length of the window frame (104).

4. A roof window (100) according to any of the preceding claims, wherein the pane (102) comprises a visible part (103) having a width (W1), wherein the at least one window covering device (110) is of a predefined width that is configured to be installed at the window having a said visible part (103) with said width (W1).

5. A roof window (100) according to any of the preceding claims, wherein the at least one first fastening mechanism (106a) comprises a bracket, such as a bracket with which the second fastening mechanism (106b) is configured to slideably engage.

6. A roof window (100) according to any of the preceding claims, wherein the machine readable identifier (132) is configured to be permanently maintained at the frame, such as by means of one or more of printing, an adhesive and/or one or more mechanical fasteners, such as by being a permanent label affixed to the frame.

7. A roof window (100) according to any of the preceding claims, wherein said one or more components (117, 106b, 119, 111) of the window covering device provides that the machine readable identifier (132) is rendered inoperable when the window covering device is installed at the window.

8. A roof window (100) according to any of the preceding claims, wherein the machine-readable identifier (132) comprises a Uniform Resource Locator (URL) representation (186) which is directed to a web address (182), such as a web address of an online store.

9. A roof window (100) according to claim 8, wherein the Uniform Resource Locator (URL) representation (186) comprises the identification data (150), such as by the identification data (150) being appended to the web address (182).

10. A roof window (100) according to any of the preceding claims wherein the machine-readable identifier (132) comprises a Quick Response (QR) code, wherein the Quick Response (QR) code comprises the identification data (150).

11. A roof window (100) according to any of the preceding claims, wherein the machine readable identifier comprises information of the window and/or of the window covering device.

12. A roof window (100) according to any of the preceding claims, wherein the identification data (150) comprises one or more of:
- product type information,
- product size information,
- product manufacturing information,
- product accessory category information and/or
- product material information
- fastening mechanism (106a, 106b) information
related to the window (100) and/or the window covering device (110).

13. A roof window (100) according to any of the preceding claims, wherein the interior blind is a roller blind, pleated blind or venetian blind.

14. A roof window (100) according to any of the preceding claims wherein a housing (119) of the covering device, a connection part of the housing, such as the second fastening mechanism (106b) and/or one or more guiding rails (117) of the covering device together or alone provides said hiding of the machine readable identifier.

## Patentansprüche

1. Dachfenster (100) für ein Gebäude, wobei das Fenster (100) Folgendes umfasst:
eine Fensterscheibe (102) und einen Rahmen (104), wobei die Scheibe (102) in dem Rahmen (104) angeordnet ist, wobei der Rahmen (104) einen beweglichen Flügel (108) umfasst, der mittels eines Scharniersystems (107) mit einem Befestigungsrahmen (105) verbunden ist, wobei das Scharniersystem (107) es dem Flügel (108) ermöglicht, relativ zu dem Befestigungsrahmen (105) geöffnet und geschlossen zu werden, und
ein Identifizierungselement, umfassend mindestens eine maschinenlesbare Kennung (132),
wobei der Rahmen (104) wie beispielsweise der Flügel (108) mindestens einen ersten Befestigungsmechanismus (106a) umfasst, der dazu konfiguriert ist, in einen zweiten Befestigungsmechanismus (106b) einer Fensterabdeckvorrichtung (110) einzugreifen,
wobei die maschinenlesbare Kennung (132) Identifizierungsdaten (150) umfasst,
wobei die Identifizierungsdaten Identifizierung mindestens einer Fensterabdeckvorrichtung (110) eines Typs ermöglichen, der dazu konfiguriert ist, mittels des ersten Befestigungsmechanismus (106a) an dem Fenster installiert zu werden, und einen oder mehrere der zweiten Befestigungsmechanismen (106b) umfasst,
wobei die maschinenlesbare Kennung (132) sichtbar an einem Teil des Rahmens (104, 105, 108) positioniert ist, wenn der Flügel geschlossen ist,
wobei das Dachfenster eine Fensterabdeckvorrichtung (110) von diesem Typ umfasst, dazu konfiguriert, an dem Fenster installiert zu werden, wobei die Fensterabdeckvorrichtung (110) an dem Fenster mittels des ersten Befestigungsmechanismus (106a) und des zweiten Befestigungsmechanismus (106b) installiert ist,
wobei die Fensterabdeckvorrichtung (110) eine Innenbeschattungen ist,
wobei die Fensterabdeckvorrichtung eine oder mehrere Komponenten (117, 106b, 119, 111) umfasst, die zumindest teilweise, wie beispielsweise im Wesentlichen vollständig, das Identifizierungselement verbergen, wenn sie an dem Fenster installiert sind.

2. Dachfenster (100) nach Anspruch 1, wobei der mindestens eine erste Befestigungsmechanismus (106a) an einer Fläche des Rahmens positioniert ist, wobei die maschinenlesbare Kennung (132) an der Fläche des Rahmens positioniert ist,
und/oder wobei die maschinenlesbare Kennung auf dem ersten Befestigungsmechanismus positioniert ist.

3. Dachfenster (100) nach Anspruch 1 oder 2, wobei die Fensterabdeckvorrichtung (110) von diesem Typ eine Jalousie mit einem Abdeckabschnitt (111) und einer oder mehreren Führungsschienen (117) zum Führen mindestens des Abdeckabschnitts (111) und zum Halten des Abdeckteils (111) entlang der Länge des Fensterrahmens (104) umfasst.

4. Dachfenster (100) nach einem der vorhergehenden Ansprüche, wobei die Scheibe (102) einen sichtbaren Teil (103) umfasst, der eine Breite (W1) aufweist, wobei die mindestens eine Fensterabdeckvorrichtung (110) eine vordefinierte Breite aufweist, dazu konfiguriert, an dem Fenster mit dem sichtbaren Teil (103) mit der Breite (W1) installiert zu werden.

5. Dachfenster (100) nach einem der vorhergehenden Ansprüche, wobei der mindestens eine erste Befestigungsmechanismus (106a) eine Halterung umfasst, wie beispielsweise eine Halterung, mit der der zweite Befestigungsmechanismus (106b) dazu konfiguriert ist, gleitend einzugreifen.

6. Dachfenster (100) nach einem der vorhergehenden Ansprüche, wobei die maschinenlesbare Kennung (132) dazu konfiguriert ist, dauerhaft an dem Rahmen gehalten zu werden, wie beispielsweise mittels eines oder mehrerer Druckmittel, eines Haftmittels und/oder eines oder mehrerer mechanischer Befestigungselemente wie beispielsweise durch ein dauerhaftes Etikett, das an dem Rahmen angebracht ist.

7. Dachfenster (100) nach einem der vorhergehenden Ansprüche, wobei die eine oder die mehreren Komponenten (117, 106b, 119, 111) der Fensterabdeckvorrichtung bereitstellen, dass die maschinenlesbare Kennung (132) unbrauchbar gemacht wird, wenn die Fensterabdeckvorrichtung an dem Fenster installiert ist.

8. Dachfenster (100) nach einem der vorhergehenden Ansprüche, wobei die maschinenlesbare Kennung (132) eine Internetadressen-(Uniform Resource Locator, URL-)Darstellung (186) umfasst, die auf eine Webadresse (182) wie beispielsweise eine Webadresse eines Online-Shops geleitet ist.

9. Dachfenster (100) nach Anspruch 8, wobei die Internetadressen- (URL-)Darstellung (186) die Identifizierungsdaten (150) umfasst, wie beispielsweise durch Anhängen der Identifizierungsdaten (150) an die Webadresse (182).

10. Dachfenster (100) nach einem der vorhergehenden Ansprüche, wobei die maschinenlesbare Kennung (132) einen Schnellantwortcode (Quick Response, QR) umfasst, wobei der Schnellantwortcode (QR) die Identifizierungsdaten (150) umfasst.

11. Dachfenster (100) nach einem der vorhergehenden Ansprüche, wobei die maschinenlesbare Kennung Informationen des Fensters und/oder der Fensterabdeckvorrichtung umfasst.

12. Dachfenster (100) nach einem der vorhergehenden Ansprüche, wobei die Identifizierungsdaten (150) eines oder mehrere von Folgendem umfassen:
Produkttypinformationen,
Produktgrößeninformationen,
Produktherstellungsinformationen,
Produktzubehörinformationen und/oder
Produktmaterialinformationen
Informationen zum Befestigungsmechanismus (106a, 106b)
in Bezug auf das Fenster (100) und/oder die Fensterabdeckvorrichtung (110).

13. Dachfenster (100) nach einem der vorhergehenden Ansprüche, wobei die Innenbeschattungen eine Rollo, eine Plissee oder eine Jalousie ist.

14. Dachfenster (100) nach einem der vorhergehenden Ansprüche, wobei ein Gehäuse (119) der Abdeckvorrichtung, ein Verbindungsteil des Gehäuses wie beispielsweise der zweite Befestigungsmechanismus (106b) und/oder eine oder mehrere Führungsschienen (117) der Abdeckvorrichtung zusammen oder allein das Verbergen der maschinenlesbaren Kennung bereitstellt.

## Revendications

1. Fenêtre de toit (100), pour un bâtiment, dans laquelle la fenêtre (100) comprend :
- une vitre (102) et un cadre (104), dans laquelle la vitre (102) est agencée dans le cadre (104), dans laquelle le cadre (104) comprend un châssis mobile (108) relié à un cadre de fixation (105) au moyen d'un système de charnière (107), dans laquelle le système de charnière (107) permet l'ouverture et la fermeture du châssis (108) par rapport au cadre de fixation (105), et
- un élément d'identification comprenant au moins un identifiant lisible par machine (132),
dans laquelle le cadre (104), tel que le châssis (108), comprend au moins un premier mécanisme de fixation (106a) configuré pour venir en prise avec un second mécanisme de fixation (106b) d'un dispositif de couverture de fenêtre (110),
dans laquelle l'identifiant lisible par machine (132) comprend des données d'identification (150),
dans laquelle les données d'identification permettent l'identification d'au moins un dispositif de couverture de fenêtre (110) d'un type qui est configuré pour être installé sur la fenêtre au moyen du premier mécanisme de fixation (106a) et comprend l'un ou plusieurs dudit second mécanisme de fixation (106b),
dans laquelle l'identifiant lisible par machine (132) est placé de manière visible sur une partie du cadre (104, 105, 108) lorsque le châssis est fermé,
dans laquelle la fenêtre de toit comprend un dispositif de couverture de fenêtre (110) dudit type configuré pour être installé sur la fenêtre, dans laquelle le dispositif de couverture de fenêtre (110) est installé sur la fenêtre au moyen dudit premier mécanisme de fixation (106a) et dudit second mécanisme de fixation (106b), dans laquelle le dispositif de couverture de fenêtre (110) est un store intérieur,
dans laquelle le dispositif de couverture de fenêtre comprend un ou plusieurs composants (117, 106b, 119, 111) qui cachent au moins partiellement, par exemple sensiblement entièrement, l'élément d'identification lorsqu'il est installé sur la fenêtre.

2. Fenêtre de toit (100) selon la revendication 1, dans laquelle l'au moins un premier mécanisme de fixation (106a) est placé sur une surface du cadre, dans laquelle l'identifiant lisible par machine (132) est placé sur la surface du cadre,
et/ou dans laquelle l'identifiant lisible par machine est placé sur le premier mécanisme de fixation.

3. Fenêtre de toit (100) selon la revendication 1 ou 2, dans laquelle ledit type de dispositif de couverture de fenêtre (110) comprend un store avec une partie de couverture (111) et un ou plusieurs rails de guidage (117) pour guider au moins la partie de couverture (111) et pour maintenir la partie de couverture (111) sur toute la longueur du cadre de fenêtre (104).

4. Fenêtre de toit (100) selon l'une quelconque des revendications précédentes, dans laquelle la vitre (102) comprend une partie visible (103) ayant une largeur (W1), dans laquelle l'au moins un dispositif de couverture de fenêtre (110) est d'une largeur prédéfinie qui est configurée pour être installée sur la fenêtre ayant ladite partie visible (103) ayant ladite largeur (W1).

5. Fenêtre de toit (100) selon l'une quelconque des revendications précédentes, dans laquelle l'au moins un premier mécanisme de fixation (106a) comprend un support, tel qu'un support avec lequel le second mécanisme de fixation (106b) est configuré pour venir en prise de manière coulissante.

6. Fenêtre de toit (100) selon l'une quelconque des revendications précédentes, dans laquelle l'identifiant lisible par machine (132) est configuré pour être maintenu en permanence sur le cadre, par exemple au moyen de l'un ou plusieurs d'une impression, d'un adhésif et/ou d'un ou plusieurs éléments de fixation mécaniques, par exemple en étant une étiquette permanente apposée sur le cadre.

7. Fenêtre de toit (100) selon l'une quelconque des revendications précédentes, dans laquelle lesdits un ou plusieurs composants (117, 106b, 119, 111) du dispositif de couverture de fenêtre permettent de rendre inopérant l'identifiant lisible par machine (132) lorsque le dispositif de couverture de fenêtre est installé sur la fenêtre.

8. Fenêtre de toit (100) selon l'une quelconque des revendications précédentes, dans laquelle l'identifiant lisible par machine (132) comprend une représentation d'adresse universelle (URL) (186) qui est dirigée vers une adresse Web (182), telle qu'une adresse Web d'une boutique en ligne.

9. Fenêtre de toit (100) selon la revendication 8, dans laquelle la représentation d'adresse universelle (URL) (186) comprend les données d'identification (150), par exemple les données d'identification (150) étant ajoutées à l'adresse Web (182).

10. Fenêtre de toit (100) selon l'une quelconque des revendications précédentes, dans laquelle l'identifiant lisible par machine (132) comprend un code de réponse rapide (QR), dans laquelle le code de réponse rapide (QR) comprend les données d'identification (150).

11. Fenêtre de toit (100) selon l'une quelconque des revendications précédentes, dans laquelle l'identifiant lisible par machine comprend des informations sur la fenêtre et/ou sur le dispositif de couverture de fenêtre.

12. Fenêtre de toit (100) selon l'une quelconque des revendications précédentes, dans laquelle les données d'identification (150) comprennent l'une ou plusieurs :
- d'informations sur le type de produit,
- d'informations sur la taille de produit,
- d'informations sur la fabrication de produit,
- d'informations sur la catégorie d'accessoires de produit, et/ou
- d'informations sur le matériau de produit
- d'informations sur le mécanisme de fixation (106a, 106b)
relatif à la fenêtre (100) et/ou au dispositif de couverture de fenêtre (110).

13. Fenêtre de toit (100) selon l'une quelconque des revendications précédentes, dans laquelle le store intérieur est un store roulant, un store plissé ou un store vénitien.

14. Fenêtre de toit (100) selon l'une quelconque des revendications précédentes, dans laquelle un boîtier (119) du dispositif de couverture, une partie de raccordement du boîtier, telle que le second mécanisme de fixation (106b) et/ou un ou plusieurs rails de guidage (117) du dispositif de couverture assurent ensemble ou seuls ledit masquage de l'identifiant lisible par machine.
